# EUROPEAN PATENT SPECIFICATION

(11) **EP 0 414 231 B1**
(45) Date of publication and mention of the grant of the patent: **26.10.1994**
(21) Application number: 90116103.4
(22) Date of filing: 22.08.1990
(51) Int. Cl.: F24F 12/00, G05D 23/24

(54) **Control device for heat collection type ventilation equipment**
Steuervorrichtung für Belüftungsanlage mit Wärmeeinfang
Dispositif de commande pour un équipement de ventilation

(30) Priority: 22.08.1989 JP 97711/89 U
(43) Date of publication of application: 27.02.1991
(73) Proprietor: SANDEN CORPORATION, Isesaki-shi Gunma, 372 (JP)
(72) Inventor: Kanuma, Yoshihiko, c/o Sanden Corporation, Isesaki-shi, Gunma 372 (JP); Kawagoe, Takeo, c/o Sanden Corporation, Isesaki-shi, Gunma 372 (JP)
(74) Representative: Prüfer, Lutz H., Dipl.-Phys.

(56) References cited:
- DE-A- 3 144 276
- DE-A- 3 728 959
- FR-A- 2 370 238
- US-A- 4 228 849
- US-A- 4 512 393

## Description

The present invention relates to a method for controlling the operation of fans in a heat collection type ventilation equipment as defined in the precharacterizing portion of claim 1. The invention further relates to a ventilation apparatus and a control device for carrying out this method.

A ventilation equipment of this kind is disclosed in document FR-A-2 370 238. In this known apparatus the temperature of the incoming air leaving the heat exchanger is measured and the speed of a first fan disposed in the air supply passage is controlled in accordance with the measured temperature value. It is further known from document DE-A-3 144 276 to measure the heat exchanger inlet and outlet temperatures, to determine the respective differences of the inlet and outlet temperatures of the supply and discharge streams and to control the fans as a function of the relation of both differences.

The conventional heat collection type ventilation equipment shown in the above-mentioned documents includes an air inlet passage to introduce outside air into the inside of a room, an air outlet passage to discharge inside air to the outside of the room, a first fan disposed in the air inlet passage for drawing outside air into the inlet passage and for supplying the air into the room, a second fan disposed in the air outlet passage for drawing inside air into the outlet passage and discharging the air to the outside, and a heat exchanger for exchanging heat between the outside air passing through the air inlet passage and the inside air passing through the air outlet passage. When the air is ventilated, the heat exchanger exchanges heat between the outside air and the inside air as the air moves through the passages. In winter, the cold outside air is heated by the hot inside air through the heat exchanger, and the heated fresh air is introduced into the room. Thus, the room is ventilated without suffering a significant decrease in temperature.

In operation of the above-described ventilation equipment, if the temperature of the outside air which is being introduced into the room is below zero degrees centigrade, water vapor which condenses from the inside air at the location of the heat exchanger, may freeze thereto. This problem is resolved in one known type of ventilation equipment which includes a heater to heat the heat exchanger when the detected temperature of the outside and the inside air is below a reference temperature. In a second known type of ventilation equipment, the operation of the fans is stopped whenever the detected temperatures are below a reference temperature.

However, when the first discussed equipment is used in cold regions in which the outside air temparature is continuously below zero degrees centigrade, it is necessary to constantly supply electricity to the heater in order to prevent the water from freezing to the exchanger. Thus, a large increase in energy cost results. Likewise, when the second type of equipment is used in cold regions, since the outside air tempeature is always below zero degrees centigrade, operation of the fans is continuously prevented, resulting in a complete lack of ventilation between the outside and the inside.

The above problems are solved in accordance with the invention by a method for controlling the operation of the fans as defined in claim 1, and further by a ventilation apparatus and a control device as defined in claims 5 and 6.

One advantage of the present invention is that adequate ventilation is provided by appropriate operation of the first and second fans, even in extremely cold regions in which the outside air temperature is consistently below zero degrees centigrade, without suffering the drawback of a frozen heat exchanger due to freezing of condensed water thereon.

Further advantages, features and other aspects of this invention will be readily understood from the following detailed description of a preferred embodiment.

Figure 1 is a schematic view of a heat collection type ventilation equipment to accordance with a preferred embodiment of this invention.

Figure 2 is a schematic circuit diagram of a control device for controlling the operation of the first and second fans of the equipment shown in Figure 2.

Figure 3 is a flow chart illustrating the operation of the control device in Figure 2.

Figure 4 is a timing chart showing the control of the fans with respect to the detected temperatures.

Figure 5 shows a conventional counterflow heat exchanger which may be used with the equipment shown in figure 1.

Figure 6 is a partial cross-sectional view of the exchanger shown in figure 5.

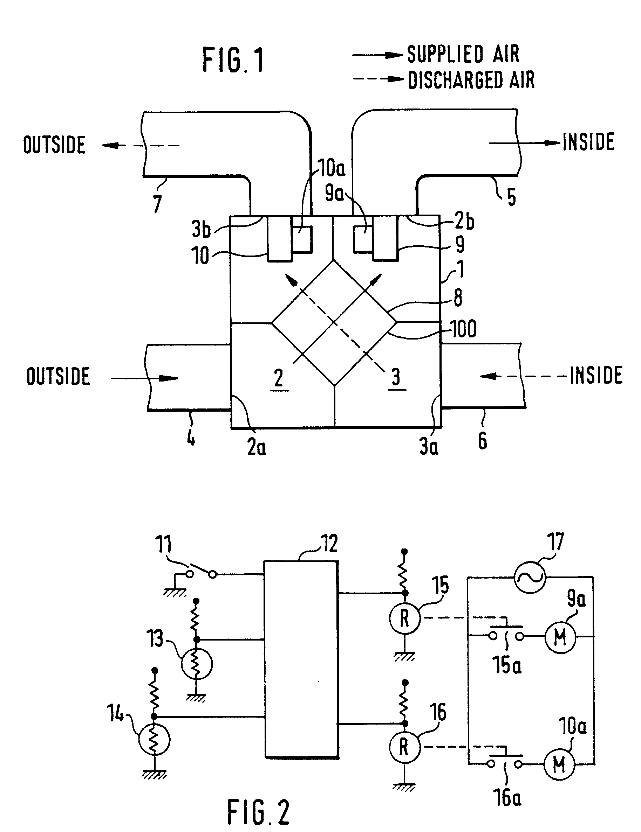

With reference to Figure 1, the construction of a heat collection type ventilation equipment in accordance with a preferred embodiment of this invention is shown.

Rectangular housing 1 includes air supply passage 2 diagonally extending therein, and air discharge passage 3 also diagonally extending therein and crossing air supply passage 2. First air supply conduit 4 and second air supply conduit 5, are connected to inlet side 2a and outlet side 2b of air supply passage 2, respectively. Outside air is introduced to passage 2 through conduit 4, and flows out from passage 2 and into the room from conduit 5. First air discharge conduit 6 and second discharge conduit 7 are connected to inlet side 3a and outlet side 3b of air discharge passage 3, respectively. Inside air flowing from the room is introduced to passage 3 through conduit 6, and flows from passage 3 through conduit 7.

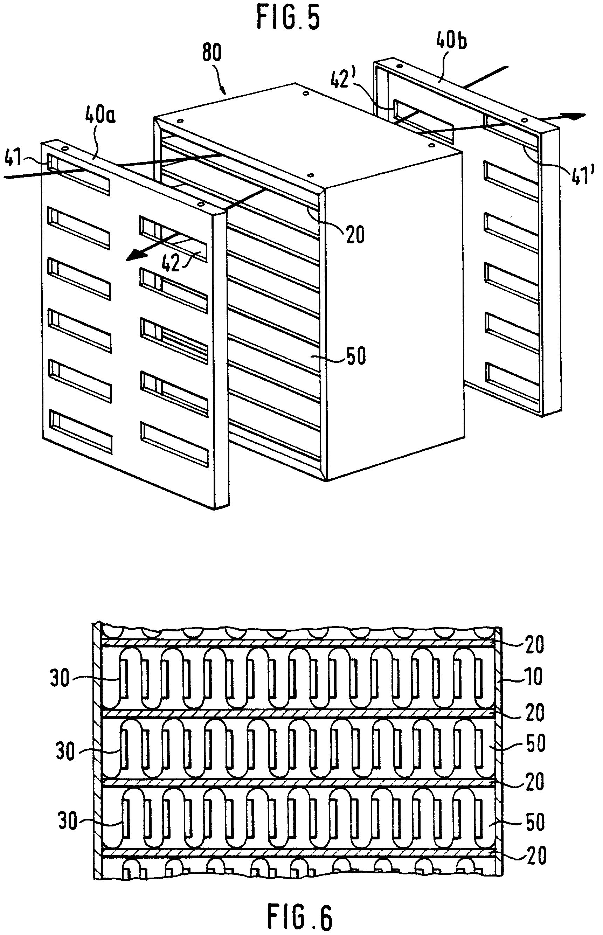

Heat exchanger 8 is disposed at the center of the interior of rectangular housing 1, at the location at which air supply passage 2 and air discharge passage 3 cross each other. The inlet and outlet sides of each passage 2 and 3 are separated from each other by partitions 100 and exchanger 80. Heat exchanger 8 may be a conventional counter flow (or sensible heat type) heat exchanger, which is known in the art and is shown in figure 5. Exchanger 8 includes housing 80 and a plurality of partitions 20 disposed at different levels within housing 80, thereby forming a plurality of distinct air flow passages 50. A plurality of fins 30 are disposed in passages 50 between partitions 20 and extend across housing 80. A plurality of openings 41 are disposed through one side of first cover plate 40a at levels corresponding to every other flow passage 50. A plurality of openings 42 also are disposed through first cover plate 40a at levels corresponding to every other flow passage 50. Openings 42 are disposed at levels corresponding to different passages 50 than the ones at which openings 41 are disposed. Openings 42 are deposed through the other side of first cover plate 40a from openings 41. A corresponding plurality of openings 41' and 42' are disposed through second cover plate 40b at the same levels as openings 41 and 42, respectively. However, openings 41' and 42' are disposed on diagonally opposite sides of exchanger 8 from openings 41 and 42.

Exchanger 8 is disposed in housing 1 such that each set of openings 41, 42, 41' and 42' are isolated from each other. Both the outside air passing through air supply passage 2 and the inside air passing through air discharge passage 3 diagonally flow through heat exchanger 8 as shown by the arrows in Figures 1 and 5, and heat is exchanged between the inside air and the outside air. First fan 9 is disposed in rectangular housing 1 at outlet side 2b of air supply passage 2 to draw outside air into passage 2, through one set of passages 50 of exchanger 8 and into the room. Second fan 10 is disposed in rectangular housing 1 at outlet side 3b of air discharge passage 3 to draw air from the room into passage 3, through the other set of passages 50 of exchanger 8, and to the outside. Therefore, by operation of the fans, fresh air is brought into the room and inside air is taken out of the room. Moreover, the fresh air is heated by the inside air as it flows through exchanger 8 to ensure that the air temperature in the room is not significantly reduced due to the ventilation.

With Further reference to Figure 2, a schematic circuit diagram of a control device for the ventilation equipment of figure 1 is shown. The circuit includes manually controlled on/off operation switch 11, and micro-computer 12 to control the operation of first and second fans 9 and 10. Micro-computer 12 is connected to first and second thermisters 13 and 14 which detect the temperatures of the inside air and the outside air, respectively, and generate signals to the computer indicating the detected temperature Micro-computer 12 is also connected to relays 15 and 16 Relays 15 and 16 control the operation of motors 9a and 10a of first and second fans 9 and 10, respectively, on the basis of control signals provided by micro-computer 12. Motor 9a is coupled to current source 17 through normally open contact point 15a of relay 15. Motor 10a is also coupled to current source 17 through normally open contact point 16a of relay 16. Thus, motors 9a and 10a operate only when normally open contact points 15a and 16a are closed, respectively. Additionally, contact points 15a and 16a are only closed when a control signal is supplied by computer 12. When relays 15a and 16a are closed, fans 9 and 10 operate.

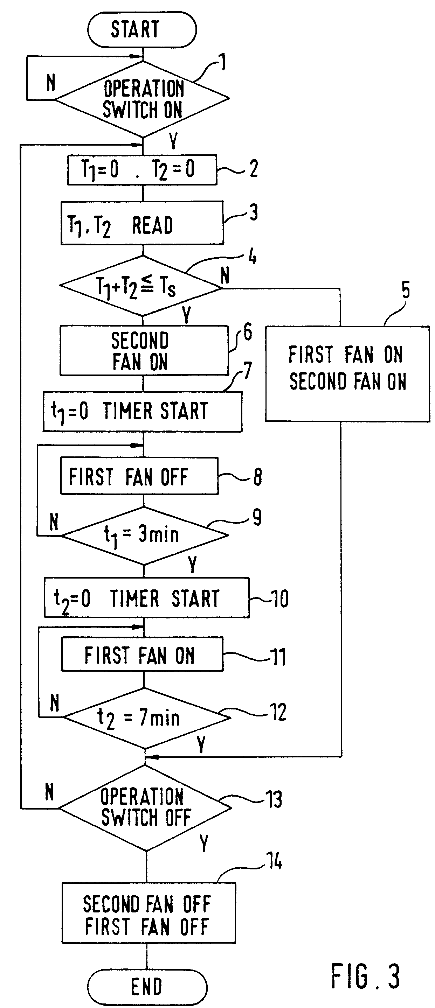

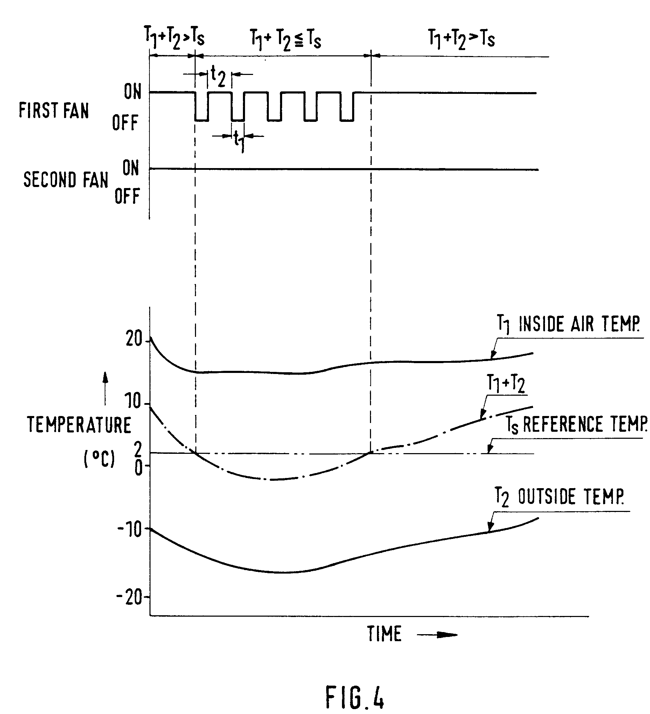

With reference to Figures 3 and 4, the operation of the control device is described. When operation switch 11 is closed at step 1. control of the equipment proceeds to step 2. In step 2, inside air temperature T₁ and outside air temperature T₂ are initialized, and are thereafter read at step 3 on the basis of the detected signals from first and second thermisters 13 and 14. In step 4, the sum of the inside air temperature T₁ and the outside air temperature T₂ is compared with reference temperature Tₛ. As Shown in Figure 4, reference temperature Tₛ may be 2°C, although Tₛ may be changed depending on the region in which the equipment is used. If the sum is higher than reference temperature T_{s,} step 5 is followed, and computer 12 controls relays 15 and 16 to close normally open contact points 15a and 16a, respectively. Current flows to motors 9a and 10a which operate to introduce the outside air into the inside of the room and to discharge the inside air to the outside. Thus, normal ventilation occurs. After step 5, step 13 is followed, and if switch 11 remains on, the operation returns to step 2 and is repeated. In this way, the temperatures of the inside and the outside air are continually monitored. If at step 13, it is determined that switch 11 is off, than both fans are shut off and ventilation ceases.

Returning to step 4, if the sum of the inside air and the outside air temperatures is determined to he equal to or lower than reference temperature Tₛ, then step 6 is followed. At step 6, only relay 16 is controlled to close normally open contact point 16a and current flows only to motor 10a of second ran 10. Therefore, inside air is discharged to the outside. At step 7, timer t₁ starts running, and for a predetermined period of time, for example, three minutes, relay 15 is not controlled to close normally open contact point 15a. Thus, for this time period during step 8, motor 9a of first fan 9 is not energized, and the outside air is not introduced into the inside of the room. In step 9, it is determined whether or not the predetermined time period has elapsed. If the time period has not elapsed yet, First fan 9 remains inoperative.

When the time has elapsed, step 10 occurs. In step 10, timer t₂ starts running, and simultaneously in step 11, relay 15 is controlled to close normally open contact point 15a. Motor 9a of first fan 9 is energized, and the outside air is introduced into the inside. In step 12, it is determined whether or not a second predetermined time, for example, seven minutes, has elapsed after timer t₂ is started. If the time has not elapsed, motor 9a of First fan 9 remains continuously energized, that is, relay 15 continuously closes contact point 15a. During this second time period, both fans operate. When the predetermined time has elapsed, it is determined whether or not operation switch 11 is still closed in step 13. If operation switch 11 has been opened, at step 14 relays 15 and 16 are no longer controlled to close normally open contact points 15a and 16a, respectively, that is, the contact points open. Motors 9a and 10a of first and second fans 9 and 10 are isolated from the current source, and all ventilation ceases. If operation switch 11 remains closed, the entire procedure is repeated starting at step 2.

As discussed above, if timer t₁ is set for three minutes and timer t₂ is set for seven minutes, and T₁ + T₂ is less than or equal to Tₛ, first fan 9 does not operate for three minutes while second fan 10 is in operation. Inside air is discharged to the outside, but no outside air is brought to the inside during this time. Thereafter, both fans operate for seven minutes and Fan 9 introduces the outside air into the inside. Thus, inside air is continually discharged to the outside as long as switch 11 is on, but outside air is only brought to the inside for a fraction of the time during which T₁ + T₂ is less than or equal to Tₛ. Accordingly, the on/off operating ratio of first fan 9 is less than the on/off ratio of fan 10. In the present case, the on/off operating ratio of first fan 9 as compared to the on/off operating ratio of second fan 10 during the time when T₁ + T₂ is less than or equal to Tₛ, is about 70% of the usual operating ratio, that is, when T₁ + T₂ is greater than Tₛ, and both fans operate continually whenever switch 11 is on. In addition, the on/off ratio of fan 9 during the time when T₁ + T₂ is less than or equal to Tₛ, as compared to the operation of fan 9 in the prior art, is also 70% since in the prior art both Fans 9 and 10 would function continually regardless of the inside and outside air temperatures, so long as switch 11 is on. That is, First Fan 9 is operated For less than 100% of the time whenever the sum of the temperatures of the outside air and the inside air is less than or equal to the predetermined reference temperature.

In the present invention, whenever the sum of inside air temperature T₁ and outside air temperature T₂ is equal to or lower than the reference temperature Tₛ, since first fan 9 which introduces the outside air into the inside is operated at an operating ratio which is lower than the usual operating ratio freezing of the condensed water in the air discharge passage to the heat exchanger is prevented because the quantity of outside air passing through the exchanger is reduced. The water which condenses in exchanger 8 and drops to partition plates 20 flows to the outside before freezing since for at least 30% of the time during operation of the exchanger, only warm air flows through passages 50, heating plates 20. Thus, freezing of the heat exchanger due to extremely cold outside air is prevented. Therefore, even if the ventilation equipment is used in a region at which the outside air temperature is continuously below zero degrees centigrade, the ventilation equipment suitably operates to ventilate the air without freezing of the heat exchanger.

In addition, the operating ratio of first fan 9 is not limited to 70%. The operating ratio can be suitably predetermined in accordance with the average temperature of the place in which the ventilation equipment is used.

The present invention has been described in detail in connection with a preferred embodiment This embodiment is merely exemplary, and the invention should not be construed as limited thereto. It should be apparent to those skilled in the art that other variations or modifications can he made within the scope of the following claims.

## Claims

1. In a heat collection type ventilation equipment, said equipment comprising an air supply passage (2) for introducing outside air into the inside, a first fan (9) disposed in said air supply passage (2), an air discharge passage (3) for discharging inside air to the outside, a second fan (10) disposed in said discharge passage (3), and heat exchanger means (8) for exchanging heat between the outside air passing through the air supply passage (2) and the inside air passing through the air discharge passage (3), a method for controlling the operation of said fans, said method being characterized by the steps of
detecting the temperature of the outside air;
detecting the temperature of the inside air;
comparing the sum of the temperatures of the outside air and the inside air with a predetermined reference temperature; and
operating the first fan (9) for less than 100 % of the time whenever the sum of the temperatures of the outside air and the inside air is less than or equal to the predetermined reference temperature.

2. The method recited in claim 1, characterized by operating the first fan (9) 70 % of the time whenever the sum of the temperatures of the outside air and the inside air is less than or equal to the predetermined reference temperature.

3. The method recited in claim 1, characterized by operating the first fan (9) less than 100 % of the time during which the second fan (10) is operated whenever the sum of the temperatures of the outside air and the inside air is less than or equal to the predetermined reference temperature.

4. The method recited in claim 3, characterized by operating the first fan (9) 70 % of the time of the second fan (10) whenever the sum of the temperatures of the outside air and the inside air is less than or equal to the predetermined reference temperature.

5. A control device for carrying out the method according to claim 1
characterized by
first sensor means (14) for detecting the temperature of the outside air;
second sensor means (13) for detecting the temperature of the inside air;
comparison means (12) for comparing the sum of the temperatures of the outside air and the inside air detected by said first and second sensor means (13, 14) with a predetermined reference temperature; and
operation control means for operating said first fan (9) at an on/off operating ratio which is less than 100 % of the on/off ratio of said second fan (10) whenever the sum of the temperatures of the outside air and the inside air is less than or equal to the reference temperature.

6. A ventilation apparatus for carrying out the method according to claim 1, the apparatus comprising
an air supply passage (2) through which outside air is introduced into the inside of a substantially enclosed environment; first fan means (9) disposed in said air supply passage (2) for drawing out said air through said air supply passage (2); an air discharge passage (3) through which inside air is discharged to the outside;
second fan means (10) disposed in the said discharge passage (3) for drawing inside air through said air discharge passage (3); heat exchanger means (8) for exchanging heat between the outside air passing through the air supply passage (2) and the inside air passing through the air discharge passage (3);
characterized by a control device according to claim 5.

7. The apparatus according to claim 6, characterized in that the operating ratio is 70 %.

8. The apparatus according to any of the claims 6 to 7, characterized in that the predetermined temperature is 2°C.

9. The apparatus according to any of the claims 6 to 8, characterized in that said operation control means comprises first and second relays (15a, 16a) disposed between said fans (9, 10) and a source of electric current, said relays being normally open to prevent said fans (9, 10) from being linked with said source, said comparison means (12) including a computer means for controlling the closing of said relays to link the fans (9, 10) with said source so as to operate said first fan (9) at a desired on/off operating ratio.

10. The apparatus according to any of the claims 6 to 9, characterized in that said first and second sensor means (14, 13) comprise thermistors linked to said computer means.

## Patentansprüche

1. Verfahren zum Steuern des Betriebes von Ventilatoren in einer Belüftungsanlage mit wärmeeinfang, die eine Luftversorgungspassage (2) zum Einführen von Außenluft nach innen, einen in der Luftversorgungspassage (2) vorgesehenen ersten Ventilator (9), eine Luftausflußpassage (3) zum Ausgeben von Innenluft nach außen, einen in der Ausflußpassage (3) vorgesehenen zweiten Ventilator (10) und ein Wärmeaustauschermittel (8) zum Austauschen von Wärme zwischen der durch die Luftversorgungspassage (2) gehenden Außenluft und der durch die Luftausflußpassage (3) gehenden Innenluft aufweist,
gekennzeichnet durch die Schritte
Erfassen der Temperatur der Außenluft,
Erfassen der Temperatur der Innenluft,
Vergleichen der Summe der Temperatur der Außenluft und der Temperatur der Innenluft mit einer vorbestimmten Referenztemperatur und
Betreiben des ersten Ventilators während weniger als 100% der Zeit, wann immer die Summe der Temperatur der Außenluft und der Temperatur der Innenluft kleiner oder gleich der vorbestimmten Referenztemperatur ist.

2. Verfahren nach Anspruch 1, gekennzeichnet durch Betreiben des ersten Ventilators (9) während 70 % der Zeit, wann immer die Summe der Temperatur der Außenluft und der Temperatur der Innenluft kleiner oder gleich der vorbestimmten Referenztemperatur ist.

3. Verfahren nach Anspruch 1, gekennzeichnet durch Betreiben des Ventilators (9) während weniger als 100% der Zeit, während der der zweite Ventilator (10) betrieben wird, wann immer die Summe der Temperatur der Außenluft und der Temperatur der Innenluft kleiner oder gleich der vorbestimmten Referenztemperatur ist.

4. Verfahren nach Anspruch 3, gekennzeichnet durch Betreiben des ersten Ventilators (9) während 70% der Zeit des zweiten Ventilators (10), wann immer die Summe der Temperaturen der Außenluft und der Temperatur der Innenluft kleiner oder gleich der vorbestimmten Referenztemperatur ist.

5. Steuervorrichtung zum Ausführen des Verfahrens nach Anspruch 1,
gekennzeichnet durch erstes Sensormittel (14) zum Erfassen der Temperatur der Außenluft,
zweites Sensormittel (13) zum Erfassen der Temperatur der Innenluft,
Vergleichsmittel (12) zum Vergleichen der Summe der Temperatur der Außenluft und der Temperatur der Innenluft, die von dem ersten und dem zweiten Sensormittel (13, 14) erfaßt sind, mit einer vorbestimmten Referenztemperatur und
Betriebssteuermittel zum Betreiben des ersten Ventilators (9) in einem Ein/Aus-Betriebsverhältnis, das kleiner als 100% des Ein/Aus-Betriebsverhältnisses des zweiten Ventilators (10) ist, wann immer die Summe der Temperatur der Außenluft und der Temperatur der Innenluft kleiner oder gleich der Referenztemperatur ist.

6. Belüftungsanlage zum Ausführen des Verfahrens nach Anspruch 1, mit
einer Luftversorgungspassage (2), durch die Außenluft in das innere einer im wesentlichen eingeschlossenen Umgebung eingeführt wird,
einem in der Luftversorgungspassage (2) vorgesehenen ersten Ventilatormittel (9) zum Herausziehen der Luft durch die Luftversorgungspassage (2),
eine Luftausflußpassage (3), durch die Innenluft nach außen ausgegeben wird,
einem in der Ausflußpassage (3) vorgesehenes zweites Ventilatormittel (10) zum Ziehen von Innenluft durch die Luftausflußpassage (3),
einem Wärmeaustauschmittel (8) zum Austauschen der Wärme zwischen der durch die Luftversorgungspassage (2) gehenden Außenluft und der durch die Luftausflußpassage (3) gehenden Innenluft,
gekennzeichnet durch eine Steuervorrichtung nach Anspruch 5.

7. Anlage nach Anspruch 6, dadurch gekennzeichnet, daß das Betriebsverhältnis 70% ist.

8. Anlage nach einem der Ansprüche 6 bis 7, dadurch gekennzeichnet, daß die vorbestimmte Temperatur 2° Celsius ist.

9. Anlage nach einem der Ansprüche 6 bis 8, dadurch gekennzeichnet, daß das Betriebssteuermittel ein erstes und ein zweites Relais (15a, 16a) aufweist, die zwischen den Ventilatoren (9, 10) und einer Quelle für elektrischen Strom vorgesehen sind, wobei die Relais normalerweise offen sind zum Verhindern, daß die Ventilatoren (9, 10) mit der Quelle verbunden sind, das Vergleichsmittel (12) ein Computermittel zum Steuern des Fließens der Relais zum Verbinden der Ventilatoren (9, 10) mit der Quelle aufweist, so daß der erste Ventilator (9) mit einem gewünschten Ein/Aus-Betriebsverhältnis tätig ist.

10. Anlage nach einem der Ansprüche 6 bis 9, dadurch gekennzeichnet, daß das erste und das zweite Sensormittel (14, 13) Termistoren aufweisen, die mit dem Computermittel verbunden sind.

## Revendications

1. Procédé de commande pour un équipement de ventilation à collection de chaleur, qui comprend un passage de prise d'air (2) pour l'amenée de l'air neuf, un premier ventilateur (9) disposé dans ledit passage de prise d'air (2), un passage de sordie d'air (3) pour évacuer de l'air intérieur (3) à l'extérieur, un deuxième ventilateur (10) disposé dans ledit passage de sortie d'air (3), et des moyens échangeur thermique (8) pour l'échange de chaleur entre l'air neuf, qui écoule par ledit passage de prise d'air (2), et l'air intérieur, qui écoule par ledit passage de sortie d'air (3), ledit procédé de commande étant prévu pour commander l'opération desdits ventilateurs et **caractérisé** par les opérations suivantes:
détecter la température de l'air neuf;
détecter la température de l'air intérieur;
comparer la somme des températures de l'air neuf et de l'air intérieur à une température de référence spécifiée; et
agencer ledit premier ventilateur (9) pour une période plus courtes que 100% du temps, quand la somme des températures de l'air neuf et de l'air Intérieur est plus petite que ou égale à ladite température de référence.

2. Procédé de commande son la revendication 1, **caractérisé** en ce que les premier ventilateur (9) est agencé pour 70% du temps quand la somme des températures de l'air neuf et de l'air intérieur est plus petie que ou égale à ladise température de référence.

3. Procédé de commande son la revendication 1, **caractérisé** en ce que ledit premier ventilateur (9) est agencé pour une période plus courte de 100% du temps de l'agencement dudit deuxième ventilateur (10), quand la somme des températures de l'air neuf et de l'air intérieur est plus petite que ou égale à ladise température de référence.

4. Procédé de commande son la revendication 3, **caractérisé** en ce que les premier ventilateur (9) est agencé pour une période correspondante à 70% du temps de l'opération dudit deuxième ventilateur (10), quand la somme des températures de l'air neuf et de l'air intérieur est plus petite que ou égale à ladise température de référence.

5. Dispositif de commande pour la réalisation du procédé selon la revendication 1, **caractérisé** par:
un premier moyens capteur (14) pour détecter la température de l'air neuf;
un deuxième moyens capteur (13) pour détecter la température de l'air intérieur;
un moyens comparateur (12) pour comparer les températures de l'air neuf et de l'air intérieur, qui sont détectées par lesdits premier et deuxième moyens capteurs (13, 14), à une température de référence spécifiée; et
un moyens de commande de service pour agencer ledit premier ventilateur (9) à un rapport de service marche/arrêt qui est plus petit que 100% du rapport de service marche/arrêt dudit deuxième ventilateur (10), quand la somme des températures de l'air neuf et de l'air intérieur est plus petite que ou égale à ladite température de référence.

6. Dispositif de commande pour la réalisation du procédé selon la revendication 1, ledit dispositif comprenant:
un passage de prise d'air (2), par lequel de l'air neuf est introduit à l'intérieur dans un environnement essentiellement renfermé,
un premier moyens de ventilation (9) disposé dans ledit passage de prise d'air (2), qui aspire de l'air par ledit passage de prise d'air (2); un passage de sortie d'air (3), par lequel de l'air intérieur est évacué à l'extérieur;
un deuxième moyens de ventilation (10) disposé dans ledit passage de sortie d'air (3), qui aspire de l'air intérieur par ledit passage de sortie d'air (3);
un moyens échangeur thermique (8) pour l'échange de chaleur entre l'air neuf, qui écoule par ledit passage de prise d'air (2), et l'air intérieur, qui écoule par ledit passage de sortie d'air (3);
**caractérisé** par un dispositif de commande selon la revendication 5.

7. Dispositif selon la revendication 6, **caractérisé** en ce que le rapport de service corresponde à 70%.

8. Dispositif selon une quelconque des revendications 6 à 7, **caractérisé** en ce que ladise température spécifiée est 2 °C.

9. Dispositif selon une quelconque des revendications 6 à 8, **caractérisé** en ce que ledit moyens de commande de service comprend un premier et un deuxième relais (15a, 16a), qui sont disposé entre lesdits ventilateurs (9, 10) et une source de courant électrique, lesdites relais comprenant un contact normalement ouvert qui empêche une liason entre lesdits ventilateurs et ladite source de courant électrique, et les moyens comparateur (12) comprenant un moyens ordinateur qui commande la fermeture desdits relais pour établir une liaison entre lesdits ventilateurs (9, 10) et ladite source de courant électrique de façon à agencer ledit premier ventilateur (9) à un rapport de service marche/arrêt souhaitè.

10. Dispositif selon une quelconque des revendications 6 à 9, **caractérisé** en ce que lesdits premiers et deuxièmes moyens capteurs (14, 13,) comprennent des thermistors reliés audit moyens ordinateur.
